# FASCICULE DE BREVET EUROPEEN

(11) **EP 2 090 984 B1**
(45) Date de publication et mention de la délivrance du brevet: **28.07.2010**
(21) Numéro de dépôt: 09151993.4
(22) Date de dépôt: 03.02.2009
(51) Int. Cl.: G06F 11/00, G06F 11/14

(54) **Procédé de sécurisation d'un programme informatique, dispositif, procédé de mise à jour et serveur de mise à jour correspondants**
Sicherungsverfahren eines Softwareprogramms sowie entsprechende Vorrichtung, entsprechendes Aktualisierungsverfahren und entsprechender Aktualisierungsserver
Method of securing a computer program, corresponding device, update method and update server

(30) Priorité: 12.02.2008 FR 0850883
(43) Date de publication de la demande: 19.08.2009
(73) Titulaire: Compagnie Industrielle et Financière d'Ingénierie "Ingenico", 92200 Neuilly sur Seine (FR)
(72) Inventeur: Naccache, David, 75018, Paris (FR)
(74) Mandataire: Bioret, Ludovic

(56) Documents cités:
- DE-C1- 10 020 562
- FR-A- 2 893 431
- US-A1- 2004 205 327
- US-A1- 2005 018 795
- US-B1- 6 629 267
- BRIDGEWATER K ET AL: "New conditions for N-version programming" SYSTEM SCIENCES, 1988. VOL.II. SOFTWARE TRACK, PROCEEDINGS OF THE TWEN TY-FIRST ANNUAL HAWAII INTERNATIONAL CONFERENCE ON KAILUA-KONA, HI, USA 5-8 JAN. 1988, WASHINGTON, DC, USA,IEEE COMPUT. SOC. PR, US, 5 janvier 1988 (1988-01-05), pages 605-611, XP010012052 ISBN: 978-0-8186-0842-1

## Description

### 1. Domaine de l'invention

Le domaine de l'invention est celui de la sécurisation des programmes informatiques. L'invention concerne plus particulièrement le contrôle permanent des programmes informatiques et la détection des erreurs ou anomalies dans ces programmes informatiques.

L'invention s'applique notamment aux programmes informatiques pour des applications critiques, par exemple dans des systèmes sécurisés de paiement par cartes bancaires, dans des moyens de transport tels que des avions, ou encore dans des sites industriels tels que des centrales nucléaires.

### 2. Art antérieur

Des techniques de test permettant de vérifier un programme informatique (ou logiciel) et de mettre en évidence les éventuelles erreurs ou anomalies de fonctionnement (appelées « bogues » en français et « bugs » en anglais) sont déjà connues.

A cet effet le document FR 2893431 décrit l'utilisation successive de deux tâches logicielles indépendantes.

On applique généralement un ensemble échantillons de données d'entrée qui sont a priori représentatifs de l'usage qui sera fait du programme et on vérifie que les données en sortie sont conformes aux données attendues par la spécification. Une fois la période de test du programme informatique terminée, le programme informatique est « mis en production » (installé, diffusé ou commercialisé) et peut par exemple piloter un dispositif dans lequel il est intégré.

La présence de bogues dans des programmes informatiques critiques peut avoir des répercussions fâcheuses ou graves pour le(s) dispositif(s) qu'ils pilotent/contrôlent. Sont ainsi critiques les programmes informatiques utilisés dans des applications nécessitant une grande précision et/ou une forte sécurité, par exemple dans les systèmes de transport (pilotage des avions, signalisation ferroviaire, logiciels embarqués automobiles), la production d'énergie (contrôle des centrales nucléaires), la santé (appareils médicaux), le domaine financier (paiement électronique) ou les applications militaires.

Les précautions à prendre dans le développement d'un tel programme informatique critique sont généralement définies par le donneur d'ordre, ou fixées par une norme, dont les exigences élevées imposent de tester le programme informatique dans un grand nombre de configurations afin de tendre vers un fonctionnement sans faille du programme informatique critique. Ainsi, pendant la période de test du programme informatique critique, on tente de maximiser le contrôle du programme informatique en lui envoyant le plus possible de séquences ou de stimuli différents.

Le document US6629267 décrit l'utilisation d'un serveur distant pour mettre à jour le programme principal pilotant un dispositif ayant détecté une anomalie.

### 3. Inconvénients de l'art antérieur

Cependant, il est impossible de tester exhaustivement un programme informatique, et notamment un programme informatique critique, dans la mesure où la période de test est souvent un compromis entre le temps et la complétude. De plus, ces tests peuvent ne pas couvrir par exemple des usages atypiques ou difficilement prévisibles, ou des évolutions de certains aspects dans le temps. On comprend qu'il n'est généralement pas possibles de couvrir toutes les possibilités, et que plus la phase de test est exhaustive, plus elle est longue, ce qui retarde d'autant la mise en oeuvre effective du programme.

### 4. Objectifs de l'invention

L'invention a notamment pour objectif de pallier ces inconvénients de l'art antérieur.

Plus précisément, un objectif de l'invention est d'améliorer la sécurité des programmes, et notamment des programmes critiques.

Un autre objectif de l'invention est de permettre de réduire la durée de la phase de test, sans réduire fortement la sécurité du programme.

L'invention a aussi pour objectif de détecter une éventuelle anomalie d'une manière qui soit simple à mettre en oeuvre.

Un autre objectif de l'invention est de permettre une réaction rapide et efficace dans le cas où une anomalie est détectée dans de tels programmes.

### 5. Résumé de l'invention

Ces objectifs, ainsi que d'autres qui apparaîtront par la suite, sont atteints à l'aide d'un procédé de sécurisation de l'utilisation d'un programme informatique principal pilotant au moins un dispositif recevant et délivrant des données.

Selon l'invention, ce procédé met en oeuvre un programme informatique secondaire de contrôle, différent dudit programme principal et apte à délivrer les mêmes données de sortie qu'au moins une portion, dite portion critique, dudit programme principal, en présence de données d'entrée identiques.

Un tel procédé de sécurisation selon l'invention est défini par la revendication 1.

L'invention permet ainsi de tester de manière permanente et non bloquante un programme, en particulier un programme principal qui est utilisé pour une application critique, même après sa phase de test. Pour ce faire, l'invention met en oeuvre un programme de contrôle (test) en parallèle du programme principal, au moins pour les portions critiques de ce programme principal. Cette mise en oeuvre est effectuée pendant la phase de « production » du programme principal, c'est-à-dire lorsque par exemple le programme principal pilote effectivement un dispositif recevant et délivrant des données, tel un terminal de paiement électronique par exemple.

L'exécution en parallèle du programme principal et du programme de contrôle permet la détection d'anomalie(s) (bogue) dans le programme principal à tout moment en phase de production. Ainsi, on peut détecter à tout moment la présence d'une anomalie, lorsque les données en sortie des deux programmes sont différentes pour les mêmes données en entrée. En cas de divergence entre ces données de sortie, une information d'anomalie est générée puis transmise vers un serveur distant sans interrompre le programme principal.

En d'autres termes, l'invention permet la vérification en permanence d'un programme principal et la détection de bogues, non seulement pendant la période de test du programme principal mais aussi pendant la période de production du programme principal.

L'invention est en outre efficace, puisque la vérification du programme principal est basée sur des données d'entrée « réelles » qui peuvent ne pas avoir été envisagées lors de la période de test du programme principal parce qu'elles correspondent à un usage atypique par exemple. L'invention permet donc de sécuriser de manière permanente et continue l'utilisation d'un programme informatique sans bloquer son exécution.

La transmission d'informations d'anomalies vers un serveur distant permet de signaler de manière rapide et efficace d'éventuelles anomalies, et avantageusement d'apporter au programme principal, de manière différée, les correctifs nécessaires (qui peuvent être diffusés vers un parc de machines, si le même programme est mis en oeuvre sur toutes ces machines, et non seulement vers celle qui a signalé l'anomalie).

Dans un mode de réalisation particulier de l'invention, l'étape de transmission comprend la transmission d'un rapport contenant un ensemble d'informations relatives à ladite anomalie, dont lesdites données d'entrée et lesdites données de sortie, destinée à permettre l'identification de l'origine de l'anomalie et sa correction.

Ceci permet de déterminer plus rapidement l'origine de l'anomalie, et la correction nécessaire.

Selon un mode de réalisation avantageux, le procédé comprend une étape de réception d'informations de correction dudit programme principal, transmise par ledit serveur.

Ainsi, l'invention permet, en réponse à la détection d'une anomalie, la transmission d'informations de correction par un serveur distant vers le dispositif piloté par le programme principal (et le cas échéant vers d'autres dispositifs utilisant ce programme). Le dispositif peut ainsi sécuriser l'utilisation du programme principal, sans qu'il y ait eu d'interruption longue de son fonctionnement.

Le procédé peut également comprendre, en complément ou de façon alternative, une étape de réception d'une commande d'interruption ou de modification dudit programme principal, transmise par ledit serveur.

Ainsi, le serveur peut commander à distance la modification du programme principal du dispositif ou l'interruption du programme principal, si l'anomalie détectée le nécessite, ou la modification du comportement du programme principal, par exemple pour qu'il passe dans un mode de fonctionnement dégradé ou sécurisé, pour empêcher notamment que l'anomalie se reproduise (par exemple en empêchant l'utilisation de la partie du code ayant générée l'anomalie) et/ou pour pallier les conséquences éventuelles de l'anomalie (par exemple en bloquant la carte bancaire qui a générée l'anomalie, en signalant l'anomalie à un utilisateur (notamment dans un véhicule ou sur un site industriel), et/ou en sécurisant le dispositif, ses équipements ou son environnement (notamment pour des applications militaires ou nucléaires)).

Selon un autre aspect, le procédé comprend une étape de stockage d'un rapport contenant un ensemble d'informations relatives à ladite anomalie.

Ainsi, un rapport peut être mémorisé dans le dispositif piloté par le programme principal, par exemple avant que les conséquences de l'anomalie ne le bloquent. Dans ce cas, le dispositif peut transmettre ce rapport au serveur distant à un instant différé.

L'invention concerne également un dispositif comprenant des moyens de traitement de données, exécutant un programme principal et mettant en oeuvre le procédé décrit ci-dessus.

Un tel dispositif est défini par la revendication 6.

Selon différents modes de réalisation particuliers de l'invention, un tel dispositif peut notamment appartenir au groupe comprenant :
- les terminaux lecteurs de cartes à puce, notamment les terminaux bancaires ;
- les serveurs de données, notamment les serveurs bancaires ;
- les dispositifs de transactions financières ou boursières ;
- les dispositifs de contrôle d'applications médicales, notamment d'administration de médicament ;
- les dispositifs de contrôle d'un moteur ;
- les dispositifs de signalisation ferroviaire ;
- les dispositifs de pilotage des avions ;
- les dispositifs embarqués automobiles ;
- les dispositifs de contrôle de sites industriels, notamment de production d'énergie (centrales nucléaires par exemple) ;
- les dispositifs de télécommunications ;
- les dispositifs mis en oeuvre dans les applications militaires.

L'invention concerne également un procédé de mise à jour d'un programme principal pilotant au moins un dispositif recevant et délivrant des données, mettant en oeuvre le procédé de sécurisation de l'invention, tel que défini par la revendication 8.

Comme expliqué plus haut, l'approche de l'invention permet en effet de corriger, ou mettre à jour, de façon simple et efficace, un tel programme principal, dès qu'une anomalie a été détectée par le programme de contrôle, bien que ce programme principal se trouve en phase de production.

Selon un mode de réalisation avantageux, ledit correctif est transmis simultanément à un ensemble de dispositifs mettant en oeuvre ledit programme principal.

Ceci permet de corriger un programme principal simultanément dans plusieurs dispositifs qui mettent en oeuvre le même programme principal.

L'invention concerne également un serveur de mise à jour d'un programme principal pilotant au moins un dispositif recevant et délivrant des données, mettant en oeuvre le procédé de sécurisation de l'invention, tel que défini par la revendication 10.

### 6. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 illustre schématiquement un exemple de système dans lequel l'invention est mise en oeuvre ;
- la figure 2 présente les étapes principales d'un procédé de sécurisation selon un mode de réalisation de l'invention, adapté au système de la figure 1;
- la figure 3 présente les étapes principales d'un procédé de mise à jour selon un mode de réalisation de l'invention, adapté au système de la figure 1.

### 7. Description d'un mode de réalisation de l'invention

Le principe général de l'invention repose sur un contrôle permanent et non bloquant d'un programme informatique, dit programme principal. Ce contrôle est effectué lors de la « phase de production » du programme principal, c'est-à-dire après une phase classique de test, lorsque par exemple le programme principal pilote un dispositif recevant et délivrant des données.

Pour ce faire, un programme de contrôle est exécuté en parallèle d'un programme principal, au moins pendant l'exécution des portions critiques du programme principal. Ceci permet la détection d'anomalie(s) dans le programme principal, en comparant les résultats (sorties) des deux programmes. Plus précisément, la présence d'une anomalie est détectée lorsque les données en sortie des deux programmes sont différentes pour les mêmes données en entrée. En cas de divergence entre ces données de sortie, une information d'anomalie est générée puis transmise vers un serveur distant, sans interrompre le programme principal, et donc de façon transparente pour les utilisateurs.

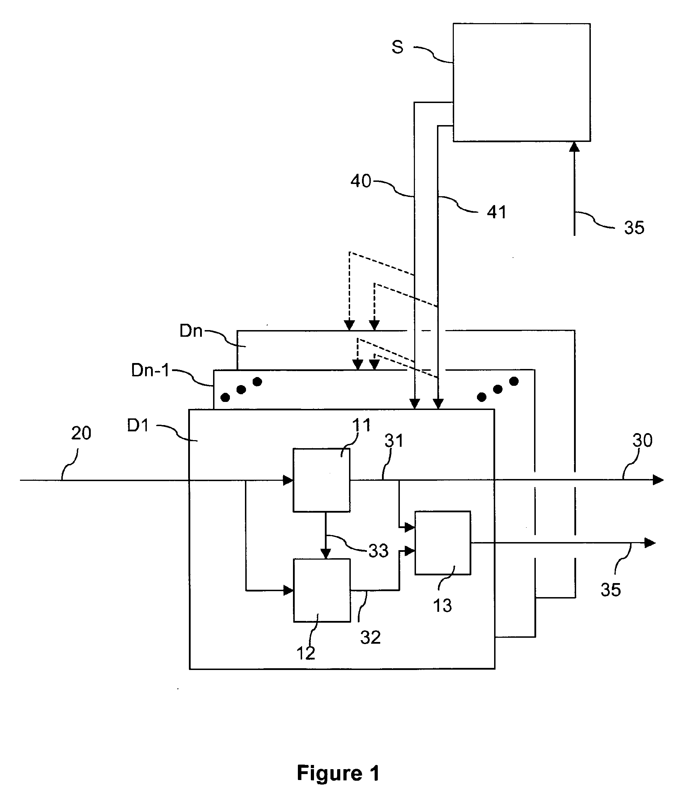

La figure 1 illustre schématiquement un exemple de système dans lequel l'invention est mise en oeuvre. Le système illustré comprend plusieurs dispositifs D1 à Dn qui peuvent chacun être utilisés dans une application critique. Le dispositif D1 par exemple peut être un terminal lecteur de cartes à puce (par exemple un terminal bancaire), un serveur de données (un serveur bancaire par exemple), un dispositif de contrôle d'applications médicales (notamment d'administration de médicament), ou un dispositif de contrôle d'un moteur.

Le dispositif D1 comprend des moyens de traitement de données, des moyens pour recevoir des données d'entrée 20 et des moyens pour délivrer des données de sortie 30. De façon classique, les moyens de traitement de données du dispositif D1 comprennent des moyens de mise en oeuvre d'un programme informatique principal 11 qui comprend une ou plusieurs portions critiques, c'est-à-dire des portions critiques de code, et/ou des portions manipulant des informations critiques.

Conformément à l'invention, les moyens de traitement du dispositif D1 comprennent aussi des moyens de mise en oeuvre d'un programme informatique secondaire de contrôle 12. Le programme secondaire de contrôle 12 est différent du programme principal 11, mais est apte à délivrer les mêmes données de sortie que les portions critiques du programme principal 11, en présence de données d'entrée identiques. En d'autres termes, le programme secondaire de contrôle 12 comprend des éléments en principe identiques aux portions critiques du programme principal 11.

Le programme principal 11 a par exemple été généré par un premier compilateur, à partir d'un code source et de spécifications données. Le programme de contrôle 12 peut quant à lui avoir été développé directement par un programmeur, ou généré par un second compilateur, distinct du premier.

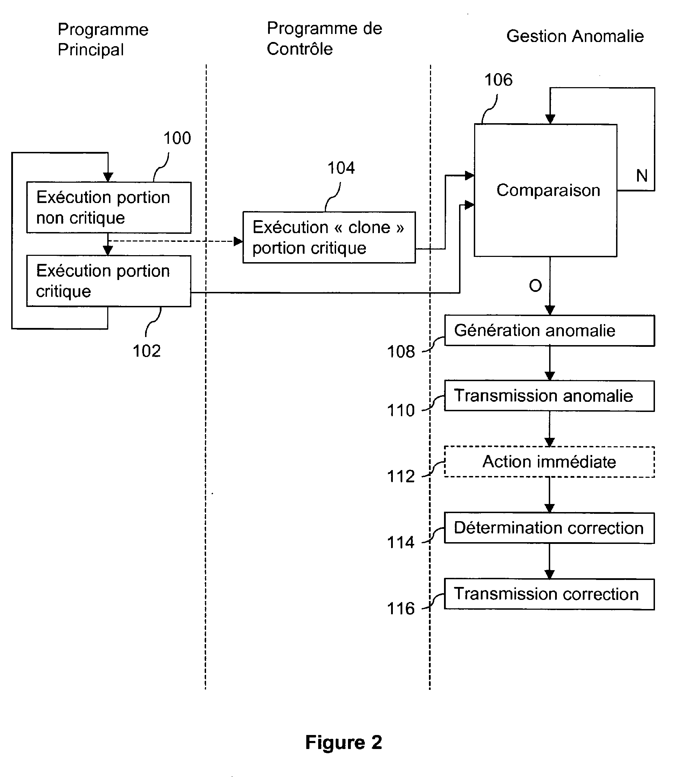

La mise en oeuvre du programme de contrôle 12 permet de tester et de sécuriser les portions critiques du programme principal 11 conformément au procédé de sécurisation de l'invention dont les étapes principales sont détaillées dans la figure 2.

On suppose ici que le programme principal 11 est exécuté par les moyens de traitement du dispositif D1 et qu'une portion non critique est exécutée en premier lieu, à l'étape 100. Lorsqu'une portion critique du programme principal est activée, le procédé de l'invention met en oeuvre une étape 102 d'exécution de la portion critique du programme principal par les moyens de traitement de données du dispositif D1, délivrant des premières données de sortie 31 en fonction de données d'entrée 20. Le procédé de sécurisation de l'invention met en oeuvre, simultanément ou séquentiellement, une étape 104 d'exécution de la même portion critique par le programme de contrôle 12, délivrant des secondes données de sortie 32 en fonction des mêmes données d'entrée 20. Pour ce faire, le programme principal 11 peut transmettre au programme de contrôle 12 une information 33 indiquant la partie critique du programme principal 11 qui est exécutée à l'étape 102.

Le programme de contrôle effectue les mêmes traitements, c'est-à-dire qu'il est censé (en l'absence de bogue) fournir les mêmes données de sortie que le programme principal, en présence des mêmes données d'entrée. Il est en revanche différent, structurellement, pour permettre la détection de ces bogues. Il a par exemple été généré par un autre compilateur, ou écrit par un humain.

Une étape 106 de comparaison des premières et des secondes données de sortie 31, 32 est ensuite mise en oeuvre dans des moyens de comparaison 13 des moyens de traitement compris dans le dispositif D1. Il est alors déterminé si ces premières et secondes données de sortie 31, 32 sont différentes. Dans le cas où il n'existe pas de différences entre les premières et secondes données de sortie 31, 32, l'exécution du programme principal 11 peut se poursuivre conformément à l'étape 100.

Dans le cas où les premières et secondes données de sortie 31, 32 sont différentes, une information d'anomalie 35 est générée en sortie des moyens de comparaison 13, conformément à l'étape 108, et le programme principal se poursuit 11, en fonction des premières données de sortie 31. L'existence d'une divergence entre les premières et secondes données de sortie 31, 32 peut en pratique correspondre à une anomalie ou erreur dans une portion critique du programme principal 11 qui n'a de préférence pas d'impact sur le fonctionnement du dispositif D1 ou qui contribue à un dysfonctionnement mineur du dispositif D1.

Dans ce mode de réalisation, l'information d'anomalie 35 générée à l'étape 108 peut être signalée immédiatement à un serveur S distant, à l'étape 110, par l'intermédiaire d'un réseau de communication de type connu. Le serveur S peut traiter l'information d'anomalie 35 de manière immédiate (étape 112) ou éventuellement la stocker pour y apporter les correctifs nécessaires à un instant différé. Lorsque le serveur S a déterminé une correction de l'anomalie à l'étape 114, il transmet cette correction au moins au dispositif D1 à l'étape 116.

Dans une variante de réalisation, l'étape 108 comprend la génération d'un rapport contenant un ensemble d'informations relatives à l'anomalie, dont les données d'entrée 20 et les données de sortie 31, 32, destiné à permettre l'identification rapide de l'origine de l'anomalie et la correction nécessaire. Dans une autre variante de réalisation, le rapport contenant un ensemble d'informations relatives à ladite anomalie peut être stocké dans des moyens de mémorisation du dispositif D1, et transmis en différé au serveur S distant (étape 110).

Le procédé de sécurisation de l'invention peut mettre en oeuvre une étape de réception par le dispositif D1 d'informations de correction 40 du programme principal 11, transmise par le serveur S distant. Le dispositif D1 peut ainsi sécuriser l'utilisation du programme principal 11, sans qu'il y ait eu d'interruption longue de son fonctionnement.

Le procédé de sécurisation de l'invention peut également comprendre, en complément ou de façon alternative, une étape de réception par le dispositif D1 d'une commande d'interruption ou de modification (notée 41 sur la figure 1) du programme principal 11, transmise par le serveur S.

Ainsi, le serveur S peut commander à distance la modification du programme principal 11 du dispositif D1 ou l'interruption du programme principal 11, si l'anomalie détectée le nécessite, ou la modification du comportement du programme principal 11, par exemple pour qu'il passe dans un mode de fonctionnement dégradé ou sécurisé, pour empêcher notamment que l'anomalie se reproduise (par exemple en empêchant l'utilisation de la partie du code ayant générée l'anomalie) et/ou pour pallier les conséquences éventuelles de l'anomalie (par exemple en bloquant la carte bancaire qui a générée l'anomalie, en signalant l'anomalie à un utilisateur (notamment dans un véhicule ou sur un site industriel), et/ou en sécurisant le dispositif, ses équipements ou son environnement (notamment pour des applications militaires ou nucléaires)).

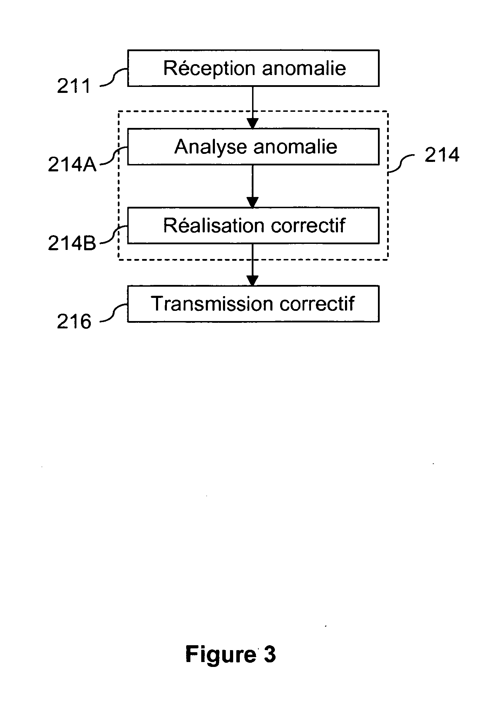

Selon le procédé de mise à jour de l'invention dont les étapes principales sont détaillées sur la figure 3, le serveur S peut corriger ou mettre à jour un programme principal pilotant au moins un des dispositifs D1 à Dn dès qu'une anomalie a été détectée par le programme de contrôle d'au moins un des dispositifs D1 à Dn. Le serveur S distant comprend ainsi des moyens de réception d'une information d'anomalie (étape 211) émise par un des dispositifs D1 à Dn. Le serveur détermine par l'intermédiaire de moyens de traitement intégrés une correction de l'anomalie à l'étape 214. Pour ce faire, le serveur S analyse l'information d'anomalie (étape 214A) et réalise un correctif d'anomalie (étape 214B), puis il diffuse le correctif d'anomalie (noté 40 sur la figure 1) à l'étape 216 vers le dispositif qui a émis l'information d'anomalie ou simultanément vers les dispositifs D1 à Dn si le même programme principal est mis en oeuvre sur tous ces dispositifs.

La technique mise en oeuvre par l'invention est avantageuse en ce sens que le contrôle du programme principal 11, qui est utilisé pour une application critique, est effectué de manière permanente et non bloquante, même après la phase de test du programme principal 11. Le contrôle du programme principal 11 est effectué lors de la « phase de production » du programme principal et est ainsi basé sur des stimuli qui peuvent ne pas avoir été envisagés pendant la période de test. Dans le cas où une anomalie est détectée dans le programme principal 11, l'anomalie est transmise à serveur distant S, ce qui permet une réaction rapide et efficace pour corriger cette anomalie sans bloquer (sauf, dans certains modes de réalisation, si l'anomalie le justifie) l'exécution du programme principal 11.

## Revendications

1. Procédé de sécurisation de l'utilisation d'un programme informatique principal (11) pilotant au moins un dispositif (D1,..., Dn) recevant et délivrant des données,
ledit programme principal (11) ayant fait l'objet d'une phase de contrôle pendant laquelle il a été soumis à une série de stimuli afin de détecter une éventuelle anomalie, et étant en phase de production,
ledit procédé mettant en oeuvre un programme informatique secondaire de contrôle (12), différent dudit programme principal (11) et apte à délivrer les mêmes données de sortie (30) qu'au moins une portion, dite portion critique, dudit programme principal (11), en présence de données d'entrée (20) identiques,
ledit procédé comprenant les étapes suivantes, au moins lorsqu'une desdites portions critiques dudit programme principal (11) est activée :
- exécution (102) de ladite portion critique, délivrant des premières données de sortie (31) en fonction de données d'entrée (20) ;
- exécution (104) dudit programme de contrôle (12), délivrant des secondes données de sortie (32) en fonction desdites données d'entrée (20) ;
- comparaison (106) desdites premières et secondes données de sortie (31, 32) et génération (108) d'une information d'anomalie (35), si lesdites premières et secondes données de sortie (31, 32) sont différentes, lesdites données d'entrée (20) correspondant à un stimulus atypique, non traité pendant ladite phase de test,
**caractérisé en ce que** le procédé comprend en outre les étapes suivantes :
- transmission (110) de ladite information d'anomalie (35) à un serveur (S) distant, en vu d'une analyse et d'une correction différée dudit programme principal (11) ;
- poursuite dudit programme principal (11), de façon transparente pour un utilisateur, en fonction desdites premières données de sortie (31), et malgré la détection de ladite anomalie.

2. Procédé de sécurisation selon la revendication 1, **caractérisé en ce que** ladite étape de transmission (110) comprend la transmission d'un rapport contenant un ensemble d'informations relatives à ladite anomalie (35), dont lesdites données d'entrée (20) et lesdites données de sortie (31, 32), destinée à permettre l'identification de l'origine de l'anomalie (35) et sa correction.

3. Procédé de sécurisation selon l'une quelconque des revendications 1 et 2, **caractérisé en ce qu'**il comprend une étape de réception d'informations de correction (40) dudit programme principal (11), transmises par ledit serveur (S).

4. Procédé de sécurisation selon l'une quelconque des revendications 1 à 3, **caractérisé en ce qu'**il comprend une étape de réception d'une commande d'interruption ou de modification (41) dudit programme principal (11), transmise par ledit serveur (S).

5. Procédé de sécurisation selon l'une quelconque des revendications 1 à 4, **caractérisé en ce qu'**il comprend une étape de stockage d'un rapport contenant un ensemble d'informations relatives à ladite anomalie.

6. Dispositif (D1,..., Dn) comprenant des moyens de traitement de données, délivrant des données de sortie (30) en fonction de données d'entrée (20), lesdits moyens de traitement comprenant des moyens de mise en oeuvre d'un programme informatique principal (11), ledit programme principal (11) ayant fait l'objet d'une phase de contrôle pendant laquelle il a été soumis à une série de stimuli afin de détecter une éventuelle anomalie, et étant en phase de production,
et des moyens de mise en oeuvre d'un programme informatique secondaire de contrôle (12), différent dudit programme principal (11) et apte à délivrer les mêmes données de sortie (30) qu'au moins une portion, dite portion critique, dudit programme principal (11), en présence de données d'entrée (20) identiques,
ledit dispositif (D1,..., Dn) mettant en oeuvre, au moins lorsqu'une desdites portions critiques dudit programme principal (11) est activée :
- des moyens d'exécution d'au moins une desdites portions critiques dudit programme principal (11), délivrant des premières données de sortie (31) en fonction de données d'entrée (20);
- des moyens d'exécution dudit programme de contrôle (12), délivrant des secondes données de sortie (32) en fonction desdites données d'entrée (20);
- des moyens de comparaison (13) desdites premières et secondes données de sortie (31, 32) et de génération d'une information d'anomalie (35), si lesdites premières et secondes données de sortie (31, 32) sont différentes, lesdites données d'entrée (20) correspondant à un stimulus atypique, non traité pendant ladite phase de test,
**caractérisé en ce qu'**il comprend :
- des moyens de transmission de ladite information d'anomalie (35) à un serveur (S) distant, en vu d'une analyse et d'une correction différée dudit programme principal (11) ;
et **en ce que** lesdits moyens d'exécution dudit programme principal (11) poursuivent leur traitement, de façon transparente pour un utilisateur, et malgré la détection de ladite anomalie.

7. Dispositif selon la revendication 6, **caractérisé en ce qu'**il appartient au groupe comprenant :
- les terminaux lecteurs de cartes à puce, notamment les terminaux bancaires ;
- les serveurs de données, notamment les serveurs bancaires ;
- les dispositifs de transactions financières ou boursières ;
- les dispositifs de contrôle d'applications médicales, notamment d'administration de médicament ;
- les dispositifs de contrôle d'un moteur ;
- les dispositifs de signalisation ferroviaire ;
- les dispositifs de pilotage des avions ;
- les dispositifs embarqués automobiles ;
- les dispositifs de contrôle de sites industriels, notamment de production d'énergie (centrales nucléaires par exemple) ;
- les dispositifs de télécommunications ;
- les dispositifs mis en oeuvre dans les applications militaires.

8. Procédé de mise à jour, par un serveur distant (S), d'un programme principal (11) pilotant au moins un dispositif (D1,..., Dn) recevant et délivrant des données, ledit dispositif (D1,..., Dn) mettant en oeuvre le procédé de sécurisation de l'une quelconque des revendications 1 à 5,
**caractérisé en ce qu'**il comprend les étapes suivantes exécutées par le serveur distant :
- réception de l'information d'anomalie (211), émise par un desdits dispositifs (D1,..., Dn), lorsque les premières données (31), délivrées par le programme principal (11) en présence de données d'entrée (20) particulières diffèrent des secondes données de sortie (32) délivrées par le programme de contrôle (12);
- analyse de ladite anomalie (214A) et réalisation d'un correctif (214B) ;
- transmission dudit correctif (216) vers ledit dispositif émetteur de ladite information d'anomalie.

9. Procédé de mise à jour selon la revendication 8, **caractérisé en ce que** ledit correctif (40) est transmis simultanément dudit serveur distant (S) à un ensemble de dispositifs (D1,..., Dn) mettant en oeuvre ledit programme principal (11).

10. Serveur (S) de mise à jour d'un programme principal (11) pilotant au moins un dispositif (D1,..., Dn) recevant et délivrant des données, ledit dispositif mettant en oeuvre le procédé de sécurisation de l'une quelconque des revendications 1 à 5,
**caractérisé en ce que** ledit serveur (S) comprend :
- des moyens de réception de l'information d'anomalie (35), émise par un desdits dispositif (D1,..., Dn), lorsque les premières données (31), délivrées par le programme principal (11) en présence de données d'entrée (20) particulières diffèrent des secondes données de sortie (32) délivrées par le programme de contrôle (12);
- des moyens d'analyse de ladite anomalie (35) et de réalisation d'un correctif (40) ;
- des moyens de transmission dudit correctif (40) audit dispositif (D1,..., Dn) émetteur de ladite information d'anomalie.

## Claims

1. Method of securing the use of a primary computer program (11) driving at least one data receiving and delivery device (D1,...,Dn),
said primary program (11) having been subject to a control phase during which it was subjected to a series of stimuli in order to detect any anomalies, and being in the production phase,
said method implementing a secondary computer checking program (12), which is different from said primary program (11) and which is capable of delivering the same output data (30) as at least a portion of said primary program (11), referred to as the critical portion, in the presence of identical input data (20),
said method comprising the following steps, when at least one of said critical portions of said primary program (11) is activated:
- execution (102) of said critical portion, delivering first output data (31) based on input data (20);
- execution (104) of said checking program (12), delivering second output data (32) based on said input data (20);
- comparison (106) of said first and second output data (31, 32) and generation (108) of anomaly information (35), if said first and second output data (31, 32) are different, said input data (20) corresponding to an atypical stimulus, which is not processed during the said test phase,
**characterised in that** the method further includes the following steps:
- transmission (110) of said anomaly information (35) to a remote server (S) with a view to non-real time analysis and correction of said primary program (11);
- continuation of said primary program (11), in a manner transparent for a user, on the basis of said first output data (31) and in spite of the detection of the said anomaly.

2. Securing method according to claim 1, **characterised in that** said transmission step (110) includes the transmission of a report containing a set of information relating to said anomaly (35), including said input data (20) and said output data (31, 32), which is intended to enable identification of the origin of the anomaly (35) and the correction thereof.

3. Securing method as claimed in any of claims 1 and 2, **characterised in that** it includes a step of receiving corrective information (40) for said primary program (11), which is transmitted by said server (S).

4. Securing method as claimed in any of claims 1 to 3, **characterised in that** it includes a step of receiving a command to interrupt or modify (41) said primary program (11), which is transmitted by said server (S).

5. Securing method as claimed in any of claims 1 to 4, **characterized in that** it includes a step for storing a report containing a set of information relating to said anomaly.

6. Device (D1,...,Dn) comprising data processing means delivering output data (30) based on input data (20), said processing means comprising means of implementing a primary computer program (11), said primary program (11) having been subject to a control phase during which it was subjected to a series of stimuli in order to detect any anomalies, and being in the production phase,
and means of implementing a secondary computer checking program (12), which is different from said primary program (11), and which is capable of delivering the same output data (30) as at least a portion of said primary program (11), referred to as the critical portion, in the presence of identical input data (20),
said device (D1,...,Dn) implementing, when at least one of said critical portions of said primary program (11) is activated:
- means of executing at least one of said critical portions of said primary program (11), delivering first output data (31) based on input data (20);
- means of executing said checking program (12), delivering second output data (32) based on said input data (20);
- means of comparing (13) said first and second output data (31, 32) and of generating anomaly information (35), if said first and second output data (31, 32) are different, said entry data (20) corresponding to an atypical stimulus, which is not processed during the said test phase,
**characterised in that** it includes:
- means of transmitting said anomaly information (35) to a remote server (S), with a view to non-real time analysis and correction of said primary program (11);
and **in that** said means of executing said primary program (11) continues processing in a manner transparent for a user, on the basis of said first output data (31) and in spite of the detection of the said anomaly.

7. Device according to claim 6, **characterised in that** it belongs to the group comprising:
- smart card-reading terminals, in particular bank terminals;
- data servers, in particular bank servers;
- financial or stock transaction devices;
- devices for monitoring medical applications, and particularly drug administration;
- engine control devices;
- railway signalling devices;
- aircraft piloting devices;
- on-board motor vehicle devices;
- devices for monitoring industrial sites, particularly energy production (nuclear power plants, for example);
- telecommunications devices;
- devices used in military applications.

8. Method for updating, via a remote server (S), of a primary computer program (11) driving at least one data receiving and delivery device (D1,...,Dn), said device (D1,...,Dn) implementing the securing method as claimed in any of claims 1 to 5,
**characterised in that** it includes the following steps executed by the remote server:
- reception of anomaly information (211) transmitted by one of said devices (D1,...,Dn), when the first data (31) delivered by the primary program (11) in the presence of particular input data (20) differs from the second output data (32) delivered by the checking program (12);
- analysis of said anomaly (214A) and production of a corrective measure (214B);
- transmission of said corrective measure (216) to said device issuing said anomaly information.

9. Updating method according to claim 8, **characterised in that** said corrective measure (40) is transmitted simultaneously from said remote server (S) to a set of devices (D1,...,Dn) implementing said primary program (11).

10. Update server (S) for a primary program (11) driving at least one data receiving and delivery device (D1,...,Dn), said device implementing the securing method as claimed in any of claims 1 to 5,
**characterised in that** said server (S) includes:
- means for receiving anomaly information (35) transmitted by one of said devices (D1,...,Dn), when the first data (31) delivered by the primary program (11) in the presence of particular input data (20) differs from the second output data (32) delivered by the checking program (12);
- means of analyzing said anomaly (35) and production of a corrective measure (40);
- means of transmitting said corrective measure (40) to said device (D1,...,Dn) issuing said anomaly information.

## Patentansprüche

1. Sicherungsverfahren für die Anwendung eines Hauptsoftwareprogramms (11), das mindestens eine Vorrichtung (D1, ....., Dn) steuert, welche Daten empfängt und liefert, wobei das besagte Hauptsoftwareprogramm (11) eine Kontrollphase durchlaufen hat, während der es einer Serie von Anreizen (frz.: stimuli) zum Erfassen einer möglichen Abweichung unterworfen wurde, und wobei das Hauptsoftwareprogramm sich in der Produktionsphase befand,
wobei das besagte Verfahren ein sekundäres Kontrollsoftwareprogramm (12) einsetzt, das sich vom besagten Hauptsoftwareprogramm (11) unterscheidet und dazu geeignet ist, die selben Ausgangsdaten (30) zu liefern wie mindestens ein, kritischer Abschnitt genannter Abschnitt des besagten Hauptprogramms (11) in Gegenwart identischer Eingangsdaten (20), wobei das besagte Verfahren die folgenden Schritte umfasst, zumindest wenn einer der besagten kritischen Abschnitte des besagten Hauptprogramms (11) aktiviert ist:
- Ausführen (102) des besagten kritischen Abschnittes, welcher erste Ausgangsdaten (31) als Funktion von Eingangsdaten (20) liefert;
- Ausführen (104) des besagten Kontrollprogramms (12), welches zweite Ausgangsdaten (32) als Funktion der besagten Eingangsdaten (20) liefert;
- Vergleich (106) der besagten ersten und zweiten Ausgangsdaten (31, 32) und Erzeugen (108) einer Abweichungsinformation (35), wenn die besagten ersten und zweiten Ausgangsdaten (31, 32) verschieden sind, wobei die besagten Eingangsdaten (20) einem atypischen Anreiz entsprechen, der während der besagten Testphase bzw. Kontrollphase (frz.: phase de test) nicht verarbeitet wurde,
**dadurch gekennzeichnet, dass** das Verfahren darüber hinaus die folgenden Schritte umfasst:
- Übertragen (110) der besagten Abweichungsinformation (35) an einen fernen Server (S), mit Hinblick auf eine Analyse und auf eine verzögerte Korrektur des besagten Hauptprogramms (11);
- Weiterführen des besagten Hauptprogramms (11) in einer für einen Benutzer transparenten Weise, als Funktion der besagten ersten Ausgangsdaten (31) und trotz des Erfassens der besagten Abweichung.

2. Sicherungsverfahren nach Anspruch 1, **dadurch gekennzeichnet, dass** der besagte Übertragungsschritt (110) das Übertragen eines Berichtes umfasst, der eine Menge von Informationen über die besagte Abweichung (35) enthält, darunter die besagten Eingangsdaten (20) und die besagten Ausgangsdaten (31, 32), wobei dieses Übertragen das Identifizieren des Ursprungs der Abweichung (35) und deren Korrektur ermöglichen soll.

3. Sicherungsverfahren nach einem der Ansprüche 1 oder 2, **dadurch gekennzeichnet, dass** es einen Schritt zum Empfang von Korrekturinformationen (40) des besagten Hauptprogramms (11) umfasst, wobei diese Informationen vom besagten Server (S) gesendet werden.

4. Sicherungsverfahren nach einem der Ansprüche 1 bis 3, **dadurch gekennzeichnet, dass** es einen Schritt zum Empfang eines Unterbrechungs- oder Änderungsbefehls (41) des besagten Hauptprogramms (11) umfasst, wobei dieser Befehl vom besagten Server (S) gesendet wird.

5. Sicherungsverfahren nach einem der Ansprüche 1 bis 4, **dadurch gekennzeichnet, dass** es einen Schritt zum Speichern eines Berichtes umfasst, der eine Menge von Informationen bezüglich der besagten Abweichung enthält.

6. Vorrichtung (D1, ..., Dn), die Mittel zum Verarbeiten von Daten enthält, welche Ausgangsdaten (30) als Funktion von Eingangsdaten (20) liefert, wobei die besagten Mittel zum Verarbeiten von Daten Mittel aufweisen, die ein Hauptsoftwareprogramm (11) zum Einsatz bringen, wobei das besagte Hauptprogramm (11) eine Kontrollphase durchlaufen hat, während der es einer Serie von Anreizen zum Erfassen einer möglichen Abweichung unterworfen wurde, und wobei das Hauptsoftwareprogramm sich in der Produktionsphase befand,
sowie Mittel zum Einsetzen eines sekundären Kontrollsoftwareprogramms (12), das sich vom besagten Hauptsoftwareprogramm (11) unterscheidet und dazu geeignet ist, die selben Ausgangsdaten (30) zu liefern wie mindestens ein, kritischer Abschnitt genannter Abschnitt des besagten Hauptprogramms (11) in Gegenwart identischer Eingangsdaten (20),
wobei die besagte Vorrichtung (D1, ..., Dn) folgendes zum Einsatz bringt, zumindest wenn einer der besagten kritischen Abschnitte des besagten Hauptprogramms (11) aktiviert ist:
- Mittel zum Ausführen von mindestens einem der besagten kritischen Abschnitte des besagten Hauptprogramms (11), welches erste Ausgangsdaten (31) als Funktion von Eingangsdaten (20) liefern;
- Mittel zum Ausführen des besagten Kontrollprogramms (12), welches zweite Ausgangsdaten (32) als Funktion der besagten Eingangsdaten (20) liefert;
- Mittel zum Vergleichen (13) der besagten ersten und zweiten Ausgangsdaten (31, 32) und zum Erzeugen einer Abweichungsinformation (35), wenn die besagten ersten und zweiten Ausgangsdaten (31, 32) verschieden sind, wobei die besagten Eingangsdaten (20) einem atypischen Anreiz entsprechen, der während der besagten Testphase bzw. Kontrollphase nicht verarbeitet wurde,
**dadurch gekennzeichnet, dass** sie folgendes umfasst:
- Mittel zum Übertragen der besagten Abweichungsinformation (35) an einen fernen Server (S), mit Hinblick auf eine Analyse und auf eine verzögerte Korrektur des besagten Hauptprogramms (11);
und **dadurch**, dass die besagten Mittel zum Ausführen des besagten Hauptprogramms (11) ihre Bearbeitung in einer für einen Benutzer transparenten Weise weiterführen, als Funktion der ersten besagten Ausgangsdaten (31) und trotz des Erfassens der besagten Abweichung.

7. Vorrichtung nach Anspruch 6, **dadurch gekennzeichnet, dass** sie zu der folgendes umfassenden Gruppe gehört:
- Terminals mit Lesevorrichtungen für Chipkarten, insbesondere Bankterminals;
- Datenserver, insbesondere Bankserver;
- Vorrichtungen für finanzielle oder Börsengeschäfte;
- Vorrichtungen zur Kontrolle medizinischer Anwendungen, insbesondere für das Verabreichen von Medikamenten;
- Vorrichtungen zur Steuerung von Motoren;
- Vorrichtungen zum Steuern von Bahnsignalen;
- Vorrichtungen zum Steuern von Flugzeugen;
- Bordvorrichtungen für PKWs;
- Vorrichtungen zur Kontrolle bzw. Steuerung von Industriestandorten bzw. Industrieanlagen, insbesondere für die Energieerzeugung (beispielsweise Kernkraftwerke);
- Telekommunikationsvorrichtungen;
- Vorrichtungen, die bei militärischen Anwendungen eingesetzt werden.

8. Verfahren zum Aktualisieren eines Hauptprogramms (11) über einen fernen Server bzw. Fernserver (S), das mindestens eine Vorrichtung (D1, ..., Dn) steuert, welche Daten empfängt und liefert, wobei die besagte Vorrichtung (D1, ..., Dn) das Sicherungsverfahren aus einem der Ansprüche 1 bis 5 anwendet,
**dadurch gekennzeichnet, dass** es die folgenden Schritte umfasst, welche vom fernen Server bzw. Fernserver ausgeführt werden:
- Empfang der von einer der besagten Vorrichtungen (D1, ..., Dn) gesendeten Abweichungsinformationen (211), wenn sich die ersten, vom Hauptprogramm (11) in Gegenwart anderer besonderer Eingangsdaten (20) gelieferten Daten (31) von den zweiten, vom Kontrollprogramm (12) gelieferten Ausgangsdaten (32), unterscheiden;
- Analyse der besagten Abweichung (214A) und Durchführung eines Korrekturvorgangs (214B);
- Übertragung des besagten Korrekturvorgangs (216) zur besagten Vorrichtung zum Senden der besagten Abweichungsinformation.

9. Aktualisierungsverfahren nach Anspruch 8, **dadurch gekennzeichnet, dass** der besagte Korrekturvorgang (40) gleichzeitig vom besagten fernen Server bzw. Fernserver (S) an eine Menge von Vorrichtungen (D1, ..., Dn) gesendet wird, welche das besagte Hauptprogramm (11) einsetzen.

10. Server (S) zum Aktualisieren eines Hauptprogramms (11), welches mindestens eine Vorrichtung (D1, ..., Dn) steuert, welche Daten empfängt und sendet, wobei die besagte Vorrichtung das Sicherungsverfahren einer der Ansprüche 1 bis 5 einsetzt,
**dadurch gekennzeichnet, dass** der besagte Server (S) folgendes umfasst:
- Mittel zum Empfang der von einer der besagten Vorrichtungen (D1, ..., Dn) gesendeten Abweichungsinformation (35), wenn sich die ersten, vom Hauptprogramm (11) in Gegenwart anderer besonderer Eingangsdaten (20) gelieferten Daten (31), von den zweiten, vom Kontrollprogramm (12) gelieferten Ausgangsdaten (32), unterscheiden;
- Mittel zum Analysieren der besagten Abweichung (35) und zum Ausführen eines Korrekturvorgangs (40);
- Mittel zum Übertragen des besagten Korrekturvorgangs (40) an die besagte Vorrichtung (D1, ..., Dn), welche die besagte Abweichungsinformation sendet.
